# DEMANDE DE BREVET EUROPEEN

(11) **EP 2 568 230 A1**
(43) Date de publication de la demande: **13.03.2013**
(21) Numéro de dépôt: 11180434.0
(22) Date de dépôt: 07.09.2011
(51) Int. Cl.: F24J 2/52

(54) **Profilé cadre pour installation solaire photovoltaïque et installation solaire photovoltaïque munie de ce profilé cadre**

(71) Demandeur: Photowatt International, 38300 Bourgoin Jallieu (FR)
(72) Inventeur: Coatanoan, Laetitia, 60800 Saint Priest (FR); Marnissi, Jihane, 69006 Lyon (FR)
(74) Mandataire: Maureau, Philippe

(57) **Abrégé**

Ce profilé cadre (1) destiné à l'assemblage de deux modules solaires photovoltaïques (2) consécutifs, comprend:
(i) un premier logement (1a) capable de recevoir un bord laminé (2b) inférieur d'un premier module solaire photovoltaïque (2), et
(ii) un deuxième logement (1 b) capable de recevoir un bord laminé (2a) supérieur d'un deuxième module solaire photovoltaïque (2),

le deuxième logement (1 b) étant agencé pour permettre le mouvement relatif du bord laminé supérieur (2a) du deuxième module solaire photovoltaïque (2) par rapport au profilé cadre (1) selon au moins un degré de liberté, en vue de faciliter le retrait et/ou la mise en place du deuxième module solaire photovoltaïque (2).

## Description

La présente invention concerne un profilé cadre destiné à l'assemblage de deux modules solaires photovoltaïques adjacents.

Dans les assemblages de modules solaires photovoltaïques connus, il est courant que deux modules photovoltaïques adjacents se chevauchent. Le bord inférieur d'un premier module photovoltaïque est ainsi souvent disposé sur le bord supérieur d'un deuxième module photovoltaïque. De même, le bord inférieur de ce deuxième module photovoltaïque est disposé sur le bord supérieur d'un troisième module photovoltaïque et ainsi de suite.

Cette disposition, conjuguée à l'inclinaison des modules, facilite l'évacuation par ruissellement des eaux pluviales, et évite la stagnation de poussières et saletés entre deux modules adjacents. Cependant, elle pose le problème du démontage de l'un des modules, par exemple défectueux en vue de son remplacement, du fait de l'imbrication des modules les uns sur les autres.

Aussi la présente invention a pour but de pallier cet inconvénient en proposant un profilé cadre assurant la jonction entre le bord inférieur d'un premier module photovoltaïque et le bord supérieur d'un deuxième module photovoltaïque et permettant de retirer ou mettre en place facilement ce deuxième module photovolatïque, indépendamment des autres modules.

A cet effet, la présente invention a pour objet un profilé cadre destiné à l'assemblage de deux modules solaires photovoltaïques consécutifs, caractérisé en ce qu'il comprend:
(i) un premier logement capable de recevoir un bord laminé inférieur d'un premier module solaire photovoltaïque, et
(ii) un deuxième logement capable de recevoir un bord laminé supérieur d'un deuxième module solaire photovoltaïque,
le deuxième logement étant agencé pour permettre le mouvement relatif du bord laminé supérieur du deuxième module solaire photovoltaïque par rapport au profilé cadre selon au moins un degré de liberté, en vue de faciliter le retrait et/ou la mise en place du deuxième module solaire photovoltaïque.

Ainsi, le profilé cadre selon l'invention permet de joindre deux bords laminés appartenant à deux modules solaires photovoltaïques distincts et adjacents ; en outre, l'existence d'au moins un degré de liberté entre l'un de ces modules solaires photovoltaïques et le profilé cadre facilite le démontage ou la mise en place de ce module, indépendamment des autres modules.

Selon une caractéristique du profilé cadre selon l'invention, le deuxième logement comprend des rebords distants l'un de l'autre d'une distance supérieure à l'épaisseur du bord laminé supérieur du deuxième module solaire photovoltaïque, permettant l'inclinaison du bord laminé supérieur du deuxième module solaire photovoltaïque par rapport au profilé cadre en vue de son extraction et/ou de sa mise en place dans le deuxième logement.

Ainsi, un degré de liberté possible entre l'un des modules solaires photovoltaïques et le profilé cadre est la rotation de ce module par rapport au profilé cadre et à l'axe de ce dernier.

De préférence, le deuxième logement présente une section transverse en U.

Selon une autre caractéristique du profilé cadre selon l'invention, celui-ci comprend un joint placé à l'intérieur du deuxième logement, le joint épousant la forme du deuxième logement de manière à assurer l'étanchéité du deuxième logement tout en permettant un déplacement du bord laminé supérieur du deuxième module solaire photovoltaïque à l'intérieur du deuxième logement.

Le joint permet de prévenir l'accumulation de saletés à l'intérieur du deuxième logement du profilé cadre. De plus, ce joint doit permettre de conserver le ou les degrés de liberté possibles entre le bord laminé supérieur du deuxième module solaire photovoltaïque et le profilé cadre.

Préférentiellement, le joint présente une forme en U.

De manière avantageuse, le premier logement du profilé cadre présente au moins un rebord formant un angle déterminé de sorte que le profilé cadre présente un plan incliné dans le sens du rampant.

Cette caractéristique présente l'avantage de faciliter le ruissellement des eaux pluviales, et conséquemment de prévenir l'introduction des eaux dans le premier logement du profilé cadre.

Selon une autre caractéristique du profilé cadre selon l'invention, le bord laminé inférieur du premier module solaire photovoltaïque est solidaire des parois du premier logement du profilé cadre.

Selon encore une autre caractéristique du profilé cadre selon l'invention, celui-ci comprend un plan incliné du côté du deuxième logement.

Cette caractéristique présente l'avantage d'éviter la formation de zones d'ombre sur le deuxième module solaire photovoltaïque.

L'invention a également pour objet une installation solaire photovoltaïque comprenant un premier et un deuxième modules solaires photovoltaïques, caractérisée en ce qu'elle comprend en outre :
(i) au moins un rail de support des premiers et deuxièmes modules solaires photovoltaïques,
(ii) des moyens de positionnement du premier module solaire photovoltaïque sur le rail de support,
(iii) des moyens de positionnement du deuxième module solaire photovoltaïque sur le rail de support, et
(iv) au moins un profilé cadre ayant les caractéristiques précitées, joignant le bord laminé inférieur du premier module solaire photovoltaïque et le bord laminé supérieur du deuxième module solaire photovoltaïque,
les moyens de positionnement du premier et du deuxième modules solaires photovoltaïques étant agencés pour permettre un jeu J prédéterminé entre le bord laminé supérieur du deuxième module solaire photovoltaïque et la paroi de fond du deuxième logement du profilé cadre ou le cas échéant celle du joint.

Cette installation, équipée du profilé cadre selon l'invention, présente l'avantage de permettre le démontage ou la mise en place de l'un de ses modules indépendamment des autres modules qu'elle comprend.

Le jeu existant à l'intérieur du deuxième logement permet le coulissement du module solaire photovoltaïque dans le deuxième logement du profilé cadre. Ce degré de liberté contribue à la facilité de mise en place ou de retrait du deuxième module solaire photovoltaïque.

Selon une forme d'exécution, le jeu J prédéterminé séparant le bord laminé supérieur du deuxième module solaire photovoltaïque et la paroi de fond du deuxième logement du profilé cadre ou le cas échéant celle du joint est sensiblement égal à la différence de longueur entre la distance séparant les moyens de positionnement du premier et du deuxième modules solaires photovoltaïques et la largeur du deuxième module solaire photovoltaïque.

On comprendra mieux les buts, aspects et avantages de la présente invention d'après la description donnée ci-après d'un mode de réalisation de la présente invention, donné à titre d'exemple non limitatif, en se référant aux dessins annexés dans lesquels :
la figure 1 montre une vue en perspective d'une installation avec plusieurs modules solaires photovoltaïques et des cadres profilés selon un mode de réalisation de l'invention,
la figure 2 montre un exemple de module solaire photovoltaïque destiné à être utilisé dans l'installation et à coopérer avec un profilé cadre selon un mode de réalisation de l'invention,
la figure 3 montre une vue en perspective d'un profilé cadre selon un mode de réalisation de l'invention,
la figure 4 montre une vue en coupe et de profil d'un profilé cadre selon un mode de réalisation de l'invention,
la figure 5 montre une vue en coupe et de profil d'un profilé cadre selon un mode de réalisation de l'invention, joignant deux modules solaires photovoltaïques consécutifs,
la figure 6 une vue partielle en perspective d'une installation selon un mode de réalisation de l'invention, sensiblement à hauteur d'une jonction entre deux modules solaires photovoltaïques consécutifs, c'est-à-dire à la jonction entre un module solaire photovoltaïque et celui qui lui succède immédiatement dans le sens du rampant,
la figure 7 est une vue partielle et de face d'un installation selon un mode de réalisation de l'invention, sensiblement à hauteur d'une jonction entre deux modules solaires photovoltaïques consécutifs,
la figure 8 est une vue en coupe selon la ligne I - I de la figure 7,
la figure 9 est une vue en coupe selon la ligne II - II de la figure 7.

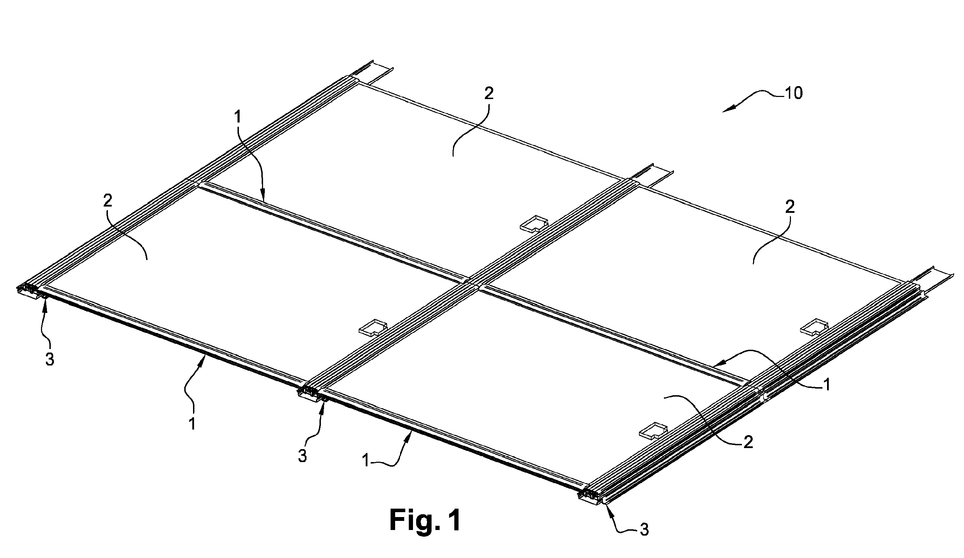

La figure 1 montre une installation 10 solaire photovoltaïque comprenant des profilés cadres 1 et une pluralité de modules solaires photovoltaïques 2 (quatre modules sont représentés sur la figure 1). Un dispositif 3 de fixation, comprenant notamment un rail 4, permet de fixer les modules solaires photovoltaïques 2 sur un support (non représenté). Le support peut être par exemple la charpente ou la soustoiture d'une toiture industrielle ou traditionnelle. Dans l'hypothèse où l'installation 10 est située sur un toit, le faîte du toit serait situé vers le haut de la figure 1, et l'avant-toit vers le bas de la figure 1. Ainsi, chaque dispositif 3 de fixation serait disposé dans le sens du rampant.

Chaque profilé cadre 1 relie deux modules solaires photovoltaïques 2 consécutifs, c'est-à-dire deux modules solaires photovoltaïques 2 immédiatement adjacents dans le sens du rampant.

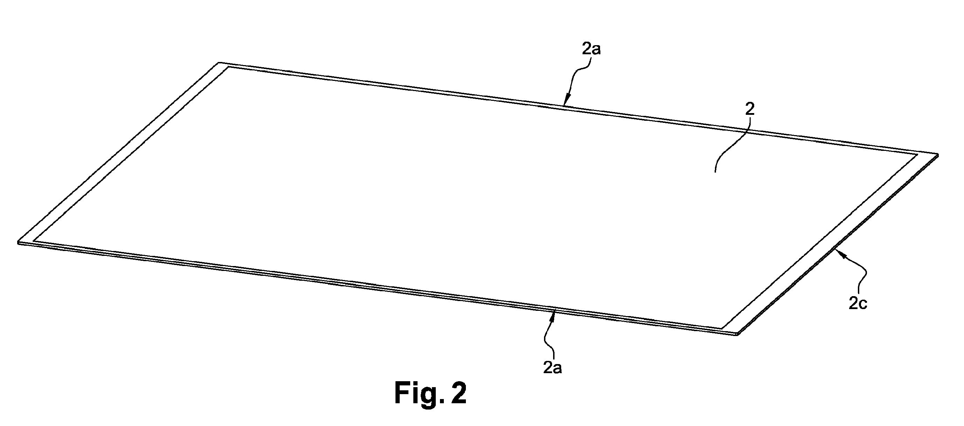

La figure 2 montre un exemple de module solaire photovoltaïque 2 destiné à être relié à un module similaire par un profilé cadre 1. Chaque module solaire photovoltaïque 2 comprend un laminé avec un bord laminé 2a supérieur, un bord laminé 2b inférieur et deux bords laminés 2c latéraux. La distance séparant le bord laminé 2a supérieur et le bord laminé 2b supérieur peut être définie comme la largeur du module solaire photovoltaïque 2. La distance séparant les deux bords laminés 2c latéraux correspond à la longueur du module solaire photovoltaïque 2. Le module solaire photovoltaïque 2 peut être relié à un module solaire photovoltaïque 2 distinct placé au-dessus grâce à un profilé cadre 1 coopérant avec son bord laminé 2a supérieur et/ou à un module solaire photovoltaïque 2 distinct placé en-dessous grâce à un profilé cadre 1 coopérant avec son bord laminé 2b inférieur.

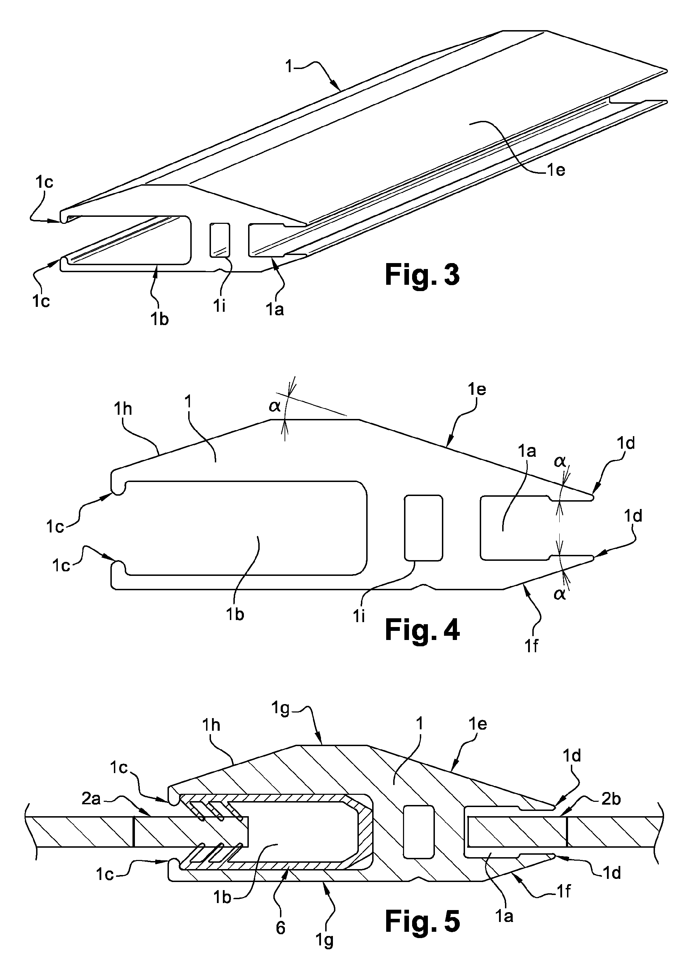

La figure 3 montre un exemple de réalisation d'un profilé cadre 1 selon l'invention.

Le profilé cadre 1 comprend un premier logement 1a et un deuxième logement 1 b. Le premier logement 1a est destiné à recevoir le bord laminé 2b inférieur d'un premier module solaire photovoltaïque 2. Le deuxième logement 1 b est destiné à recevoir le bord laminé 2a supérieur d'un deuxième module solaire photovoltaïque 2. Ainsi, le cadre profilé 1 réalise l'assemblage du premier et du deuxième modules solaires photovoltaïques 2.

Selon la forme de réalisation illustrée à la figure 4, le profilé cadre 1 présente deux plans inclinés 1e et 1f. Il peut présenter en outre un plan de symétrie P, également visible sur la figure 4. Le plan de symétrie P est parallèle au plan des modules solaires photovoltaïques 2.

Un autre plan incliné 1 h peut être prévu, comme cela est visible par exemple sur la figure 4. Le plan incliné 1 h est, à la différence des plans inclinés 1e et/ou 1f placé du côté du profilé cadre 1 destiné à être orienté vers le deuxième module solaire photovoltaïque 2. Le plan incliné 1 h permet d'éviter la création de zones d'ombres sur le deuxième module solaire photovoltaïque 2.

Le deuxième logement 2b est agencé pour permettre un mouvement relatif entre le profilé cadre 1 et le deuxième module solaire photovoltaïque 2 dont le bord laminé 2a supérieur est inséré dans ce deuxième logement 2b.

Ce mouvement relatif peut avoir lieu selon au moins un degré de liberté. Il permet le retrait (ou l'insertion) aisé du bord laminé 2a supérieur du deuxième module solaire photovoltaïque 2, donc une mise en place ou un démontage facile et rapide de ce deuxième module solaire photovoltaïque 2, indépendamment des modules solaires photovoltaïques 2 adjacents.

Ce degré de liberté minimum peut correspondre à une rotation relative du deuxième module solaire photovoltaïque 2 par rapport à l'axe du profilé cadre 1. Il est ainsi possible d'incliner le deuxième module solaire photovoltaïque par rapport au profilé cadre 1.

Pour permettre cette inclinaison, le deuxième logement 1b peut comprendre des rebords 1 c distants l'un de l'autre d'une distance supérieure à l'épaisseur du bord laminé 2a supérieur du deuxième module solaire photovoltaïque 2, comme cela est visible sur la figure 5.

Dans la forme d'exécution représentée sur les différentes figures, le deuxième logement 1b présente une section transverse en U. Le bord laminé 2a supérieur du deuxième module solaire photovoltaïque 2 est ainsi disposé entre les branches du U formé par le deuxième logement 2b.

Comme cela est illustré à la figure 5, le profilé cadre 1 peut comporter, à l'intérieur du deuxième logement 2b, un joint 6. Le joint 6 épouse avantageusement la forme du deuxième logement 1 b. Si ce dernier présente une forme en U, le joint 6 présente également une forme en U. Le joint 6 permet d'empêcher l'accumulation de saletés à l'intérieur du deuxième logement 2b, tout en autorisant le mouvement du bord laminé 2a supérieur par rapport au profilé cadre 1. Le joint 6 peut présenter des pattes flexibles. Celles-ci sont avantageusement orientées vers l'intérieur du U formé par le joint 6, comme cela est visible sur la figure 5. Elles peuvent se rattacher à l'une des branches du U formé par le joint 6.

Le premier logement 1a du profilé cadre 1 comprend avantageusement des rebords 1d formant chacun un angle α. L'angle α est capable de faciliter le ruissellement des eaux pluviales. Il correspond à l'angle formé entre chaque plan incliné 1e et/ou 1f et le plan P, ou entre chaque plan incliné 1e et/ou 1f et la surface du laminé du premier module solaire photovoltaïque 2b inférieur (comme cela est visible sur la figure 5), ou entre chaque plan incliné 1e et/ou 1f et la surface extérieure 1g du profilé cadre 1. L'angle α est déterminé de sorte que le plan incliné 1e soit incliné par rapport à l'horizontale, dans le sens du rampant, une fois le profilé cadre 1 et l'installation 10 mis en place.

Le bord laminé 2b inférieur du premier module solaire photovoltaïque 2, inséré dans le premier logement 1a, peut être fixé à l'intérieur de ce dernier, par exemple par collage.

Conformément aux figures 3 à 5, le profilé cadre 1 peut comprendre un orifice 1i. Cet orifice 1i est apte à permettre le passage d'une vis pour mise à la terre. Il est par exemple disposé latéralement sur le profilé cadre 1.

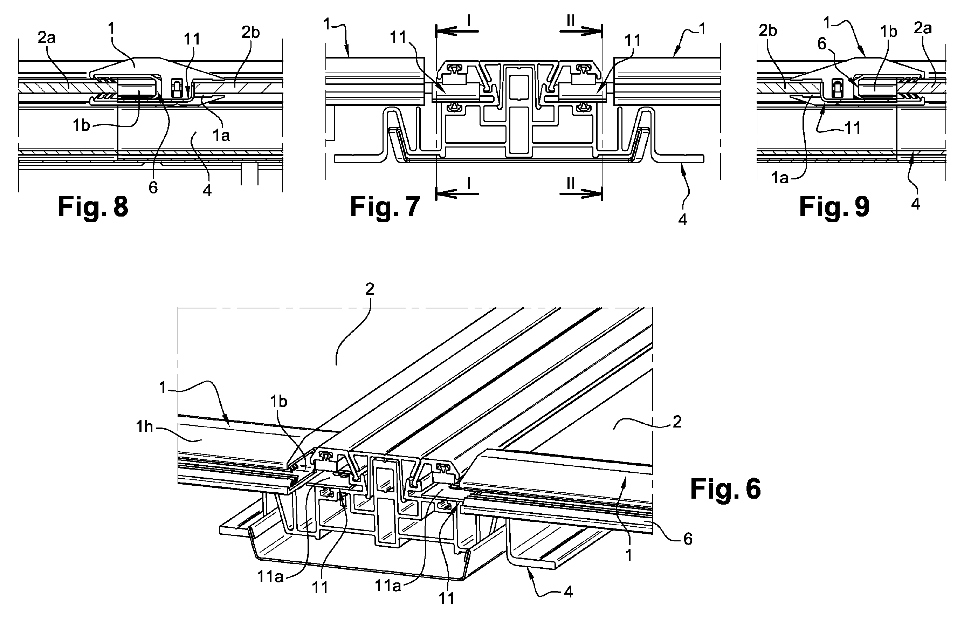

Comme cela est visible sur la figure 1, et sur les figures 6 à 9, l'installation 10 comprend le rail 4 permettant de fixer les modules solaires photovoltaïques de l'installation 10 sur un support (non représenté).

L'installation 10 comprend également des moyens de positionnement de chacun des modules solaires photovoltaïques 2 sur les rails 4. Ces moyens de positionnement comprennent par exemple des butées 11.

Chaque butée 11 présente deux ailes 11a et 11 b sécantes, par exemple perpendiculairement. Ces ailes 11a et 11 b peuvent être inégales, de sorte que les butées 11 présentent une forme en L, comme illustré à la figure 8 ou à la figure 9. L'aile 11a est fixée sur le rail 4. Elle peut par exemple être soudée au rail 4. Le bord laminé 2b inférieur d'un module solaire photovoltaïque 2 est destiné à venir au contact d'une surface de l'aile 11 b. Chaque aile 11 b supporte ainsi un module solaire photovoltaïque 2.

Le long du rail 4, une ou plusieurs autres butées 11 sont prévues à intervalles réguliers pour supporter le bord laminé 2b inférieur de modules solaires photovoltaïques 2 consécutifs.

De manière avantageuse, les butées 11 sont agencées les unes par rapport aux autres de manière à permettre un jeu J prédéterminé entre le bord laminé 2a supérieur et la paroi de fond du deuxième logement 1 b ou du joint 6 le cas échéant, comme illustré à la figure 9.

Ce jeu J prédéterminé est sensiblement égal à la différence entre la distance séparant deux butées 11 consécutives le long du rail 4, c'est-à-dire deux butées 11 supportant chacune un module solaire photovoltaïque 2, ces deux modules solaires photovoltaïques 2 étant consécutifs, et la largeur des modules solaires photovoltaïques 2.

L'existence de ce jeu J augmente la mobilité des panneaux solaires photovoltaïques 2 par rapport au profilé cadre 1, de sorte qu'il est plus facile par exemple de démonter un module solaire photovoltaïque 2 de l'installation 10. En effet, le bord laminé 2a supérieur d'un module solaire photovoltaïque 2 peut coulisser à l'intérieur du deuxième logement 1b du profilé cadre 1 à l'intérieur duquel il est inséré.

Bien entendu, l'invention n'est nullement limitée au mode de réalisation décrit ci-dessus, ce mode de réalisation n'ayant été donné qu'à titre d'exemple. Des modifications restent possibles, notamment du point de vue de la constitution des divers éléments ou par la substitution d'équivalents techniques, sans sortir pour autant du domaine de protection de l'invention.

Ainsi, selon une variante de réalisation et en lieu et place de pattes flexibles, le joint 6 peut être remplacé par un joint à lèvres, qui peut également être en forme de U et dont les lèvres, aux extrémités des branches de ce U, sont orientées vers l'intérieur du U.

## Revendications

1. Profilé cadre (1) destiné à l'assemblage de deux modules solaires photovoltaïques (2) consécutifs, **caractérisé en ce qu'**il comprend:
(i) un premier logement (1a) capable de recevoir un bord laminé (2b) inférieur d'un premier module solaire photovoltaïque (2), et
(ii) un deuxième logement (1 b) capable de recevoir un bord laminé (2a) supérieur d'un deuxième module solaire photovoltaïque (2),
le deuxième logement (1b) étant agencé pour permettre le mouvement relatif du bord laminé supérieur (2a) du deuxième module solaire photovoltaïque (2) par rapport au profilé cadre (1) selon au moins un degré de liberté, en vue de faciliter le retrait et/ou la mise en place du deuxième module solaire photovoltaïque (2).

2. Profilé cadre (1) selon la revendication 1, **caractérisé en ce que** le deuxième logement (1 b) comprend des rebords (1 c) distants l'un de l'autre d'une distance supérieure à l'épaisseur du bord laminé (2a) supérieur du deuxième module solaire photovoltaïque (2), permettant l'inclinaison du bord laminé (2a) supérieur du deuxième module solaire photovoltaïque (2) par rapport au profilé cadre (1) en vue de son extraction et/ou de sa mise en place dans le deuxième logement (1 b).

3. Profilé cadre (1) selon la revendication 1 ou 2, **caractérisé en ce que** le deuxième logement (1 b) présente une section transverse en U.

4. Profilé cadre (1) selon l'une des revendications 1 à 3, **caractérisé en ce qu'**il comprend un joint (6) placé à l'intérieur du deuxième logement (1 b), le joint (6) épousant la forme du deuxième logement (1 b) de manière à assurer l'étanchéité du deuxième logement (1 b) tout en permettant un déplacement du bord laminé (2a) supérieur du deuxième module solaire photovoltaïque (2) à l'intérieur du deuxième logement (1 b).

5. Profilé cadre (1) selon la revendication 4, **caractérisé en ce que** le joint (6) présente une forme en U.

6. Profilé cadre (1) selon l'une des revendications 1 à 5, **caractérisé en ce que** le premier logement (1a) du profilé cadre (1) présente au moins un rebord (1d) formant un angle (α) déterminé de sorte que le profilé cadre (1) présente un plan incliné (1e) dans le sens du rampant.

7. Profilé cadre (1) selon l'une des revendications 1 à 6, **caractérisé en ce que** le bord laminé (2b) inférieur du premier module solaire photovoltaïque (2) est solidaire des parois du premier logement (1a) du profilé cadre (1).

8. Profilé cadre (1) selon l'une des revendications 1 à 7, **caractérisé en ce qu'**il comprend un plan incliné (1 h) du côté du deuxième logement (1 b).

9. Installation (10) solaire photovoltaïque comprenant un premier et un deuxième modules solaires photovoltaïques (2), **caractérisée en ce qu'**elle comprend en outre :
(i) au moins un rail (4) de support des premiers et deuxièmes modules solaires photovoltaïques (2),
(ii) des moyens de positionnement du premier module solaire photovoltaïque (2) sur le rail (4) de support,
(iii) des moyens de positionnement du deuxième module solaire photovoltaïque (2) sur le rail (4) de support, et
(iv) au moins un profilé cadre (1) selon l'une des revendications 1 à 8, joignant le bord laminé (2b) inférieur du premier module solaire photovoltaïque (2) et le bord laminé (2a) supérieur du deuxième module solaire photovoltaïque (2),
les moyens de positionnement du premier et du deuxième modules solaires photovoltaïques (2) étant agencés pour permettre un jeu (J) prédéterminé entre le bord laminé (2a) supérieur du deuxième module solaire photovoltaïque (2) et la paroi de fond du deuxième logement (1 b) du profilé cadre (1) ou le cas échéant celle du joint (6).

10. Installation (10) selon la revendication 9, **caractérisée en ce que** le jeu (J) prédéterminé séparant le bord laminé (2a) supérieur du deuxième module solaire photovoltaïque (2) et la paroi de fond du deuxième logement (1 b) du profilé cadre (1) ou le cas échéant celle du joint (6) est sensiblement égal à la différence de longueur entre la distance séparant les moyens de positionnement du premier et du deuxième modules solaires photovoltaïques (2) et la largeur du deuxième module solaire photovoltaïque (2).
